# EUROPEAN PATENT APPLICATION

(11) **EP 3 097 963 A1**
(43) Date of publication of application: **30.11.2016**
(21) Application number: 15741056.4
(22) Date of filing: 15.01.2015
(51) Int. Cl.: B01D 33/06, B01D 63/14, C02F 1/32, C02F 1/46

(54) **PLEATED FILTER, BALLAST WATER TREATMENT DEVICE USING SAME, AND BALLAST WATER TREATMENT METHOD**

(30) Priority: 24.01.2014 JP 2014010849
(71) Applicant: Sumitomo Electric Industries, Ltd., Osaka-shi, Osaka 541-0041 (JP)
(72) Inventor: TANIDA, Kazuhiro, Osaka-shi Osaka 554-0024 (JP); YAHAGI, Satoshi, Osaka-shi Osaka 554-0024 (JP)
(74) Representative: Boult Wade Tennant
(86) International application number: PCT/JP2015/050912
(87) International publication number: WO 2015/111496

(57) **Abstract**

A pleated filter cartridge includes a pleated filter formed of a filter base having folds that repeatedly form peak portions and valley portions, the pleated filter having a shape of a cylinder whose axial direction is a ridge line direction of the folds, and lid portions disposed on an upper bottom and a lower bottom of the pleated filter. Reinforcing members whose top and bottom are fixed in the lid portions are provided in the valley portions viewed from the outside of the shape of the cylinder.

## Description

### Technical Field

The present invention relates to a structure of a pleated filter that is mainly used for filtration of a liquid. In particular, the present invention relates to a pleated filter used in a treatment system of ballast water stored in ships and used for filtration of a large amount of water, and an apparatus using the same.

### Background Art

A wide variety of filters are used for the purpose of separating and removing a solid, which is a contaminant, from a gas or a liquid. Pleated filters whose filtration areas are increased by folding a filter so as to have a pleated shape are also used mainly in applications involving a gas, for example, in an air purification system. PTL 1 discloses an example of use of a cylindrically shaped pleated filter as a filter device for removing sludge from a cutting fluid of a machine tool. Regarding this device, it is described that a filter device having a high filter-cleaning effect can be provided by ejecting a liquid toward an outer surface of a cylindrical filter while rotating the filter.

Meanwhile, treatment of ballast water carried in ships has become an issue in recent years. Ballast water is seawater carried in a ship to provide safe voyage even when the ship is empty of cargo. Various methods for removing, killing, or inactivating microbes by purifying ballast water have been developed. Methods using filtration for the purpose of removing relatively large microbes have also been developed. For example, PTL 2 describes a ballast water treatment apparatus using a filter membrane, the apparatus being filed by the applicant of the present invention.

### Citation List

### Patent Literature

PTL 1: Japanese Unexamined Patent Application Publication No. 2008-93783
PTL 2: Japanese Patent No. 4835785
PTL 3: Japanese Unexamined Patent Application Publication No. 2012-245428

### Summary of Invention

### Technical Problem

In the case of seawater desalination, the use of brackish water/seawater for purposes such as ballast water, or the treatment of water such as sewage water, human sewage, or industrial wastewater, a preliminary filtration treatment for removing foreign matter, contaminants, and microbes in the water is necessary. The inventors of the present application have been examining the application of a pleated filter to such filtration. In this case, it is necessary to filter a large amount of water in the shortest possible time. However, in general, the operation at a large scale/high flow rate causes a technical problem in that a decrease in the amount of treatment or the filtration function due to clogging at an early stage is easily caused.

The apparatus disclosed in PTL 2 is a filtering device in which a cylindrical filter is installed in a tubular case and a liquid flowing from the outside to the inside of the cylindrical filter is collected as a filtrate. A liquid to be filtered is ejected from a nozzle provided on a side face of the tubular case onto a part of a filtering surface of the filter, thereby cleaning filtered products deposited on a surface of the filter to recover the permeation flux, and the filtered products that have been washed out are discharged from a filtration front chamber. With this structure, a stable filtration state is continuously maintained. An important factor for stably maintaining continuous filtration of such a system is the cleaning effect obtained by ejecting, onto the filtering surface of the filter, the liquid to be filtered. In order to efficiently and effectively clean the entire filter by changing a cleaning region of the filter with time, the cylindrical filter of the above device is rotated during filtration by driving a motor or the like, thus continuously and periodically changing the position to which the ejection of the liquid to be filtered from the ejection nozzle is applied. In order to reliably perform this rotation cleaning and to stably maintain a high filtration flow rate, the ejection of the liquid to be filtered from the nozzle needs to be maintained at a certain high flow rate level or more. However, according to the studies conducted by the inventors, it was found that, as a result of being subjected to ejection of the liquid to be filtered at such a high flow rate, the cylindrical filter degrades with time and breaks, and part of the liquid to be filtered may be mixed directly with the filtrate without passing through the filter.

In view of this, an object of the present invention is to provide a pleated filter whose degradation and breakage due to use are prevented and which can be stably used for a long period of time, a ballast water treatment apparatus functioning as a filtering device using the pleated filter, and a ballast water treatment method using the pleated filter.

### Solution to Problem

The inventors of the present invention conducted intensive studies on degradation of a filter and confirmed that breakage easily occurs in folded portions corresponding to peaks and valleys of pleats of a filter that has been subjected to ejection of a liquid to be filtered at a high flow rate. The measures disclosed in PTL 3 filed by the applicant of the present invention are reinforcing means formed by a method in which, for example, a resin is applied to folds of pleats. The inventors of the present invention further found that a particular cause of tearing lies in valley portions of a cylindrical pleated filter and arrived at the following structures.

Specifically, a filter cartridge of the present invention is a pleated filter cartridge including a pleated filter formed of a filter base having folds that repeatedly form peak portions and valley portions, the pleated filter having a shape of a cylinder whose axial direction is a ridge line direction of the folds, and lid portions disposed on an upper bottom and a lower bottom of the pleated filter, in which reinforcing members whose top and bottom are fixed in the lid portions are provided in the valley portions viewed from the outside of the shape of the cylinder.

A ballast water treatment apparatus of the present invention is a ballast water treatment apparatus using, as a filter membrane, the cylindrical pleated filter cartridge described above, the pleated filter cartridge being rotatable about a cylindrical axis. The ballast water treatment apparatus of the present invention includes an untreated-water nozzle that ejects untreated water toward an outer circumferential surface of the pleated filter, a case that includes an outer cylindrical portion provided so as to surround the pleated filter and including a nozzle opening of the untreated-water nozzle therein, a filtered-water flow path that leads filtered water having passed through the pleated filter from the inside of the cylinder of the pleated filter to the outside of the case, and a discharge flow path that discharges discharge water that is not filtered by the pleated filter to the outside of the case.

Furthermore, a ballast water treatment method of the present invention is a method for treating ballast water, the method including installing the above ballast water treatment apparatus in a hull, using, as untreated water, seawater taken from the outside of the hull, further applying a sterilization treatment to filtered water treated by the ballast water treatment apparatus, and subsequently storing the resulting water in the hull as ballast water.

### Advantageous Effects of Invention

According to the above, it is possible to provide a pleated filter whose breakage due to use is prevented, thereby contributing to stable use for a long period of time, and a ballast water treatment apparatus and a ballast water treatment method using the pleated filter.

### Brief Description of Drawings

[Fig. 1] Figure 1 is a perspective schematic view illustrating the basic structure of a pleated filter cartridge.
[Fig. 2] Figure 2 is a perspective schematic view illustrating the structure of a pleated filter prepared by removing lid portions from the pleated filter cartridge in Fig. 1.
[Fig. 3] Figure 3 is a sectional schematic view of a part of a pleated filter viewed from above a cylinder, and is a view illustrating a relationship with an untreated-water nozzle.
[Fig. 4] Figure 4 is a schematic view illustrating a state of a pleated filter deformed by a pressure of untreated water.
[Fig. 5A] Figure 5A is a view illustrating an example of an embodiment of a reinforcing member.
[Fig. 5B] Figure 5B is a view illustrating another example of an embodiment of a reinforcing member.
[Fig. 5C] Figure 5C is a view illustrating another example of an embodiment of a reinforcing member.
[Fig. 5D] Figure 5D is a view illustrating another example of an embodiment of a reinforcing member.
[Fig. 5E] Figure 5E is a view illustrating another example of an embodiment of a reinforcing member.
[Fig. 6] Figure 6 is a sectional schematic view illustrating another embodiment of a pleated filter cartridge.
[Fig. 7A] Figure 7A is a view illustrating an example of a ballast water treatment apparatus according to an embodiment of the present invention and is a sectional schematic view illustrating the structure of a vertical section including an axis line.
[Fig. 7B] Figure 7B is a schematic view illustrating the structure of a horizontal AA-AA section of the ballast water treatment apparatus in Fig. 7A.
[Fig. 8] Figure 8 is a block diagram illustrating an example of the overall structure of a ballast water treatment system using a ballast water treatment apparatus according to an embodiment of the present invention.

### Reference Signs List

2 reinforcing sheet
10 pleated filter
101 pleated filter cartridge
11 filter base
12, 13 lid portion
15 reinforcing member
16 untreated-water nozzle
17 shallow valley portion
18 deep valley portion
41 pump
42 filtering device
43 sterilization device
44 tank
31,32,33,34,35,36 pipe
102 untreated-water nozzle
103 case
106 untreated-water flow path
107 filtered-water flow path
108 discharge flow path
115 reinforcing member
121 nozzle opening
131 outer cylindrical portion
132 lid portion
133 bottom portion
140 central pipe
141 water intake hole
190 motor
191 motor cover
A maximum length of pillar-shaped member in radial direction of shape of cylinder
B maximum length of pillar-shaped member in direction perpendicular to radial direction
D difference between pleat depth of shallow valley portion and pleat depth of deep valley portion
Dd pleat depth of deep valley portion
Ds pleat depth of shallow valley portion

### Description of Embodiments

### [Description of embodiments of present invention]

Embodiments of the present invention will be listed and described.

An embodiment of the present invention is a pleated filter cartridge including a pleated filter formed of a filter base having folds that repeatedly form peak portions and valley portions, the pleated filter having a shape of a cylinder whose axial direction is a ridge line direction of the folds, and lid portions disposed on an upper bottom and a lower bottom of the pleated filter, in which reinforcing members whose top and bottom are fixed in the lid portions are provided in the valley portions viewed from the outside of the shape of the cylinder.

According to the above embodiment, deformation of fold portions of the valley portions is restricted by the reinforcing members, thereby preventing breakage (breaking or splitting) of folds generated by repeated deformation such as bending or deflection of the fold portions during use of the filter. The above embodiment is particularly effective in a filtering device having a structure in which untreated water is filtered from the outside of a cylindrical pleated filter to the inside thereof and the flow rate and the pressure of the untreated water locally change. This is because bending is repeatedly applied to the folds of the pleated filter by a change in the flow rate (pressure) of untreated water, and thus a stress is concentrated on a single point and breakage easily occurs on the folds. The reinforcing members are preferably provided along the folds and in the vicinity of the bottoms of the valley portions which are inside of the folds of the filter base.

In the case where the reinforcing members are provided in the valley portions along the folds, the stiffness of the reinforcing members in the radial direction of the cylinder of the pleated filter is preferably in a range in which deformation of the pleated filter within a range of the proportional limit is not hindered, as in the stiffness in a direction perpendicular to the radial direction of the cylinder, i.e., along the circumference of the cylinder. This is because the degree of restriction of the deformation in the circumferential direction is reduced while deformation of the folds in the valley portions in the radial direction of the cylinder is suppressed. This structure prevents a concentration of a stress on the folds caused by repeating significant deformation in the radial direction of the cylinder and more effectively prevent tearing of the folds.

As means for simply achieving the above difference in stiffness, each of the reinforcing members is preferably a pillar-shaped member. In a cross section orthogonal to the axial direction of the shape of the cylinder, a ratio A/B preferably satisfies 1 < A/B ≤ 5 where A represents a maximum length of the pillar-shaped member in a radial direction of the shape of the cylinder, and B represents a maximum length of the pillar-shaped member in a direction perpendicular to the radial direction.

For example, in the case where each of the reinforcing members has a pillar shape having a rectangular cross section, the longer the length of the reinforcing member in a radial direction of the cylinder, the higher the stiffness of the reinforcing member in the radial direction and the more deflection is suppressed. Accordingly, deformation of the folds along the reinforcing members in the radial direction of the cylinder is also suppressed. On the other hand, since the stiffness in the circumferential direction is lower than that in the radial direction, the folds are not significantly deformed, and a certain reinforcing effect can be obtained while allowing a deformation with a certain degree of freedom. The cross section of the pillar-shaped member is not limited to a quadrangle. A circle or a polygon may be used as a basic cross section, and various modifications such as the formation of protrusions and grooves may be made in order to provide a directionality of stiffness. A pillar-shaped member having a circular or regular polygonal cross section provides substantially the same strain both in the direction of the cylindrical axis of the pleated filter cartridge and in the circumferential direction thereof, and thus followability to the base can be enhanced. In addition, by providing a uniform cross section, strain that is uniform over the entire length of the pillar can be provided. The pillar-shaped member is assumed to be composed of a material that is homogeneous in a cross section. In this case, typically in a cross section, when a ratio A/B satisfies 1 < A/B ≤ 5, the required difference in stiffness can be obtained. In the above relationship, A represents a maximum length of the pillar-shaped member in a radial direction of the shape of the cylinder, and B represents a maximum length of the pillar-shaped member in a direction perpendicular to the radial direction. When the ratio A/B exceeds 5, the stiffness in the radial direction of the cylinder is excessively high, deformation of the whole pleated filter is excessively restricted, and the effect of cleaning the filter may be affected. When the ratio A/B is 1 or less, the relationship of the stiffness becomes reversed. Accordingly, unless, for example, other means are used in combination, the degree of the breakage prevention effect due to only the dimensional effect may decrease.

The material of the pillar-shaped member is not particularly limited for this purpose. A modulus of elasticity in tension of the pillar-shaped member is preferably 20% or more and 80% or less of a modulus of elasticity in tension of the filter base. This is because deformation of the folds of the filter base is appropriately and effectively suppressed. The purpose of providing the reinforcing member is to support the filter base so as to avoid a concentration of a stress of deformation while facilitating the change in the shape of the filter base. When the modulus of elasticity in tension of the pillar-shaped member is less than 20%, the pillar-shaped member does not sufficiently prevent a concentration of a stress while suppressing deformation of the filter base. When the modulus of elasticity in tension of the pillar-shaped member exceeds 80%, the stiffness of the reinforcing member is high, and deformation of the shape of the filter is excessively suppressed.

The pillar-shaped member preferably includes flow path portions for making a flow of untreated water smooth. A typical preferred example of the flow path portions is a plurality of holes provided in a direction intersecting the axial direction. Alternatively, the pillar-shaped member may have, as the flow path portions, a plurality of protrusions and recesses on a surface that comes in contact with the filter base. A flow of filtration of untreated water from the outer surface of the cylinder of the filter to the inside of the cylinder is blocked by the presence of the pillar-shaped members in the valley portions. In order to decrease the degree of blocking of the flow, it is preferable to avoid clogging of the bottom of the valley portions by the pillar-shaped members in a direction in which the valley portions are viewed from the outside of the cylinder. Therefore, it is effective for providing holes in the pillar-shaped members or providing protrusions and recesses on surfaces of the pillar-shaped members. The shape of the holes and the shapes of the protrusions and recesses are not limited. Various shapes may be used as long as the strength and stiffness of the pillar-shaped members are not impaired.

In still another embodiment, the pleated filter has shallow valley portions having a small pleat depth and deep valley portions having a large pleat depth, the shallow valley portions and the deep valley portions being alternately arranged. The relationship Ds > (1/3)Dd is satisfied where Ds represents the pleat depth of the shallow valley portions and Dd represents the pleat depth of the deep valley portions. This is for the purpose of ensuring the area of the pleated filter necessary for filtration. In addition, the relationship A ≤ D ≤ 10A is preferably satisfied where D represents a depth difference (= Dd - Ds) between the pleat depth of the shallow valley portions and the pleat depth of the deep valley portions, and A represents a maximum length of the pillar-shaped member in the radial direction of the shape of the cylinder.

In order to increase the filtration area of the pleated filter, it is preferable to reduce the spacing between pleats as much as possible and to increase the number of pleats. From this viewpoint, in the case where a pillar-shaped member is inserted between valley portions, the spacing between pleats in the valley portions is restricted by the width of the pillar-shaped member in the circumferential direction. By providing a difference in pleat depth as described above, pillar-shaped members can be disposed so as to be alternately shifted in the radial direction of the cylinder. With this structure, the spacing between pleats can be reduced, and the number of pleats can be increased. Herein, the phrase "shallow valley portions and deep valley portions are alternately arranged" typically refers to a structure in which a shallow valley portion is arranged in every other valley portion. However, various modifications can be made as long as a desired effect is achieved. For example, one deep valley portion may be arranged with respect to two shallow valley portions. Alternatively, two deep valley portions may be arranged subsequent to two shallow valley portions. The number of depth values of the valley portions is not limited to two (a shallow valley portion and a deep valley portion). For example, valley portions having different depths may be provided so that the depth value of the valley portions is changed in a plurality of stages such as three stages.

Furthermore, the present invention discloses a ballast water treatment apparatus using, as a filter membrane, the cylindrical pleated filter cartridge described above. Specifically, the ballast water treatment apparatus uses, as a filter membrane, the cylindrical pleated filter cartridge, the pleated filter cartridge being rotatable about a cylindrical axis, the ballast water treatment apparatus including an untreated-water nozzle that ejects untreated water toward an outer circumferential surface of the pleated filter, a case that includes an outer cylindrical portion provided so as to surround the pleated filter and including a nozzle opening of the untreated-water nozzle therein, a filtered-water flow path that leads filtered water having passed through the pleated filter from the inside of the cylinder of the pleated filter to the outside of the case, and a discharge flow path that discharges discharge water that is not filtered by the pleated filter to the outside of the case.

In the apparatus having the above structure, since untreated water is ejected from a nozzle opening disposed outside the cylinder of the cylindrical pleated filter toward an outer surface of the pleated filter, the pressure of the untreated water is concentrated on a part of the pleats. Consequently, the pressure is applied in directions in which the pleats open, and the filter is more likely to be broken in each of the valley portions and the peak portions as described above. In view of this, by adopting the above reinforcing members, the occurrence of breakage of valley portions can be prevented, and it is possible to expect advantages such as suppression of the occurrence of filtration failure, long-term operation of the apparatus due to extension of the lifetime of the pleated filter, and reduction in operation costs.

A method in which the pleated filter is used in filtration may be a method for treating ballast water, the method including installing the ballast water treatment apparatus, using, as untreated water, seawater taken from the outside of the hull, further applying a sterilization treatment to filtered water treated by the ballast water treatment apparatus, and subsequently storing the resulting water in the hull as ballast water.

By using the apparatus or using the method, breakage of a filter is suppressed as compared with existing techniques, and the filter can be stably used for a long period of time without causing filtration failure. Consequently, the labor cost of maintenance and the cost of materials to be exchanged can be reduced, and the production of ballast water can be further facilitated.

### [Details of embodiments of present invention]

Structures of a pleated filter cartridge and a ballast water treatment apparatus according to embodiments of the present invention will now be described with reference to the drawings. The present invention is not limited to these exemplifications but is defined by the claims described below. It is intended that the present invention includes equivalents of the claims and all modifications within the scope of the claims.

### (Structure of pleated filter cartridge)

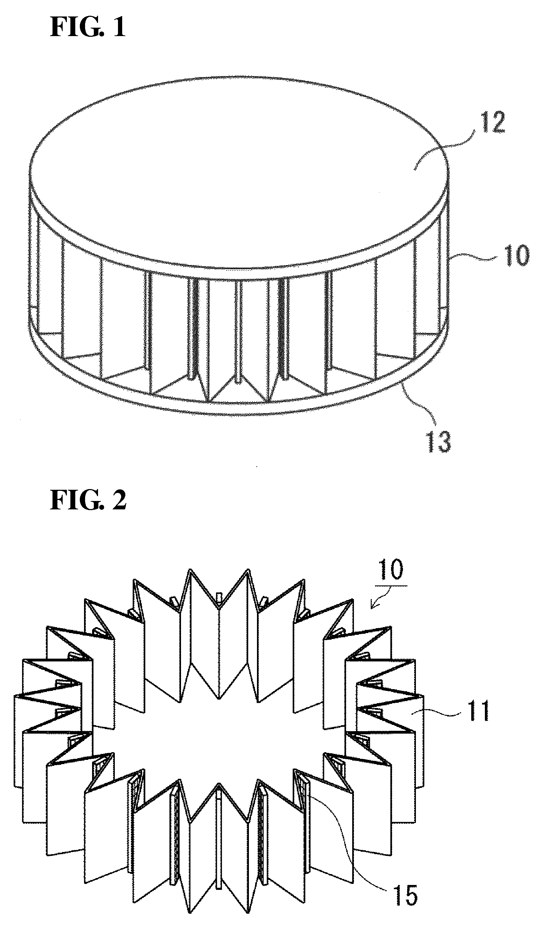

Figures 1 and 2 schematically illustrate an example of a typical structure of a pleated filter cartridge. Figure 1 is a perspective view of the appearance of a pleated filter cartridge. Reference numeral 10 denotes a pleated filter in which folds are arranged to form a cylindrical shape. The top and the bottom of the pleated filter are closed with lid portions 12 and 13, respectively. The upper and lower lid portions 12 and 13 have a function of fixing the shape of the pleated filter and also fixing reinforcing members at the upper and lower ends. The lid portions seals the inside of the cylinder from the outside in a watertight manner. Although not shown in Fig. 1 for the sake of simplicity, in the structure of a ballast water treatment apparatus as described below, a rotational shaft and a pipe for taking filtered water from the inside of the cylinder are provided in the lid portions.

Figure 2 is a perspective schematic view illustrating the pleated filter 10 prepared by removing the upper and lower lid portions 12 and 13 from the pleated filter cartridge in Fig. 1. In this schematic view, the number and the dimensions of the pleats, and the shape and the dimensions of reinforcing members do not have a meaning, and the pleats and the reinforcing members are drawn so as to be easily understood for the purpose of illustrating the structure. The pleated filter 10 is obtained by forming a pleated shape by repeatedly folding a sheet-like filter base 11 so as to have alternating peaks and valleys, and further connecting both ends of the filter base 11 to have a cylindrical shape as a whole. In the explanatory drawing, since the pleated shape is schematically shown, each of the folds is drawn with an ideal acute angle. However, in reality, the fold is bent to form a curve in many cases. In order to increase the filtration area, the pleats are preferably densely arranged to the extent that adjacent pleats come in contact with each other. The pleated filter cartridge of this embodiment includes reinforcing members 15 in valley portions viewed from the outside of the cylindrical shape. The reinforcing members 15 are preferably arranged at positions that come in contact with a surface of the filter base in the vicinity of the valley portions. The effect of the reinforcing members is obtained as long as, when the filter base 11 is deformed during the filtration operation, the reinforcing member are in contact with the filter base, and the reinforcing members are arranged at positions at which the reinforcing members support the deformation of the filter base. The reinforcing members are preferably columnar reinforcing members, and folds are preferably formed on the filter base so that each of the folds has an arc shape along a surface of the column. This is because such columnar reinforcing members do not have corners, unnecessary friction does not occur between each reinforcing member and the filter base, and the deformation of the filter base can be supported effectively.

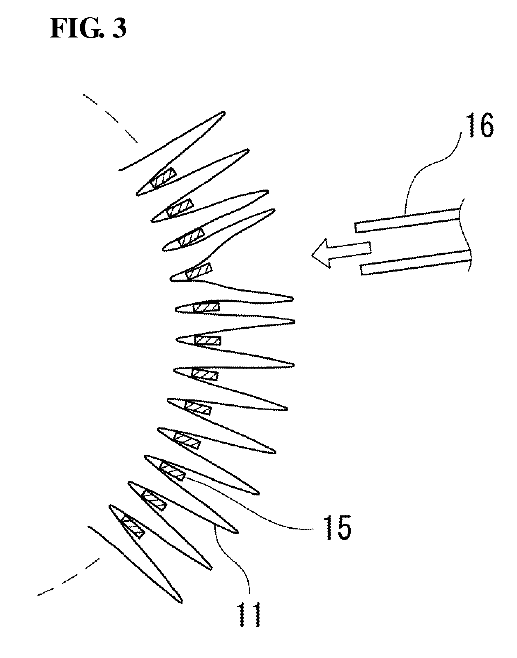

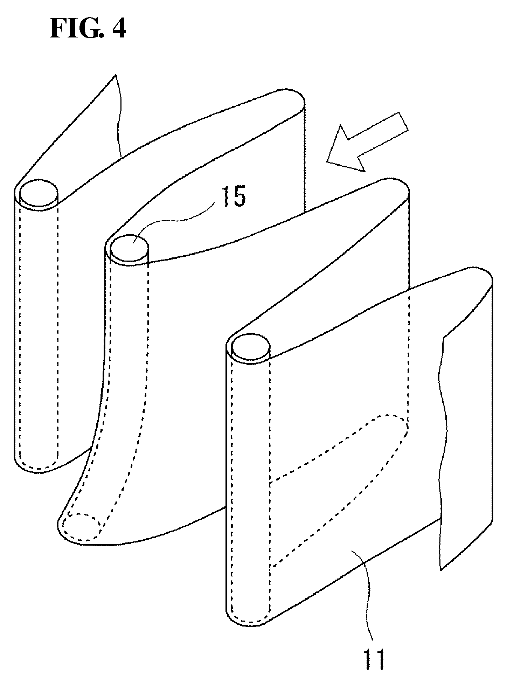

The operation of the reinforcing members will be described. The reinforcing members of the present invention are suitable for a case where the pleated filter is used so as to perform filtration from the outside to the inside of the cylinder, and the pressure of untreated water is applied so as to be concentrated from the outside of the cylinder to a part of the circumference of the cylinder. Figure 3 is a sectional schematic view of a part of a pleated filter viewed from above a cylinder, and is a view illustrating a relationship with an untreated-water nozzle. An untreated-water nozzle 16 that ejects untreated water is provided so as to face an outer circumferential surface of the pleated filter. The untreated water flows in a space between pleats, thereby increasing the spacing between the pleats in a portion facing the untreated-water nozzle 16. When the untreated water is allowed to flow while rotating the pleated filter or while sequentially shifting the nozzle position, the portion where pleats expand sequentially moves. Since the top and the bottom of the pleated filter are fixed, the upper end and the lower end of the pleated filter do not expand even when the untreated water flows in the pleated filter. In peak portions on the outer circumferential side of the pleated filter, a central portion of each of the peak portions in the vertical direction is expanded, and consequently, the fold is deformed so as to form a curve. At this time, a central portion of a valley portion in the vertical direction is deformed toward the peak portion side (i.e., in the radial direction of the cylinder) so as to be pulled to the expanded peak portions. Figure 4 illustrates this state. Although illustration of lid portions is omitted in Fig. 4, the upper and lower ends of the pleated filter are fixed together with reinforcing members. Figure 4 illustrates, as an exaggerated schematic view, a state of deformation of a valley portion when untreated water flows in the direction shown by the arrow, and a space between central portions of peak portions of a pleated filter is opened. A central portion of a valley portion is pulled to the peak portion side in a state where the top and bottom of the valley portion are fixed. Consequently, a force is applied in a direction in which folds are opened while central portions of the folds are pulled in the direction of the peak portions. When a central portion of a fold significantly moves, as a result, a stress is concentrated on a part of the fold, and the fold bends also in the vertical direction, which may result in the tearing (breakage). The reinforcing member 15 supports a pleated portion of the filter base 11 so as to prevent the pleated filter from bending and prevents bending due to a concentration of a stress to a single point. As in the state illustrated in Fig. 4, the reinforcing member curves as a whole while being in contact with a fold of a pleat, thereby achieving the above operation. More preferably, a reinforcing member (whose shape is not necessarily the same as that of the reinforcing member on a valley portion) is further provided on the back side of each peak portion because the reinforcing member prevents a stress from concentrating in a direction in which peak portions are opened, and thus an effect of preventing the tearing is obtained.

A porous resin sheet is used as the base of the filter. Examples of the base that can be used include porous structures such as a stretched porous body, a porous body by phase separation, and a non-woven cloth that are composed of a material such as polyester, nylon, polyethylene, polypropylene, polyurethane, polytetrafluoroethylene (PTFE), or polyvinylidene fluoride (PVdF). For the purpose of a treatment at a high flow rate, a non-woven cloth composed of a polyester such as polyethylene terephthalate is particularly suitably used.

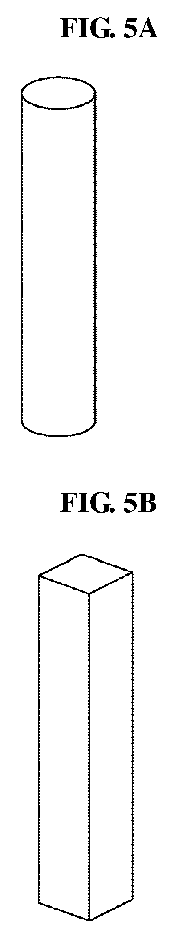

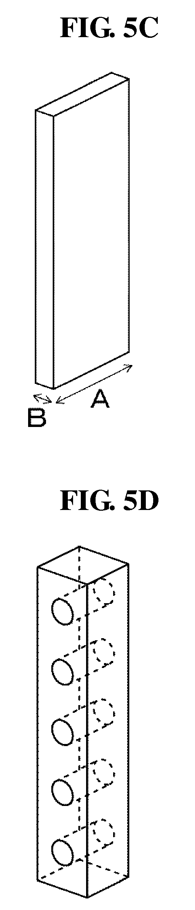

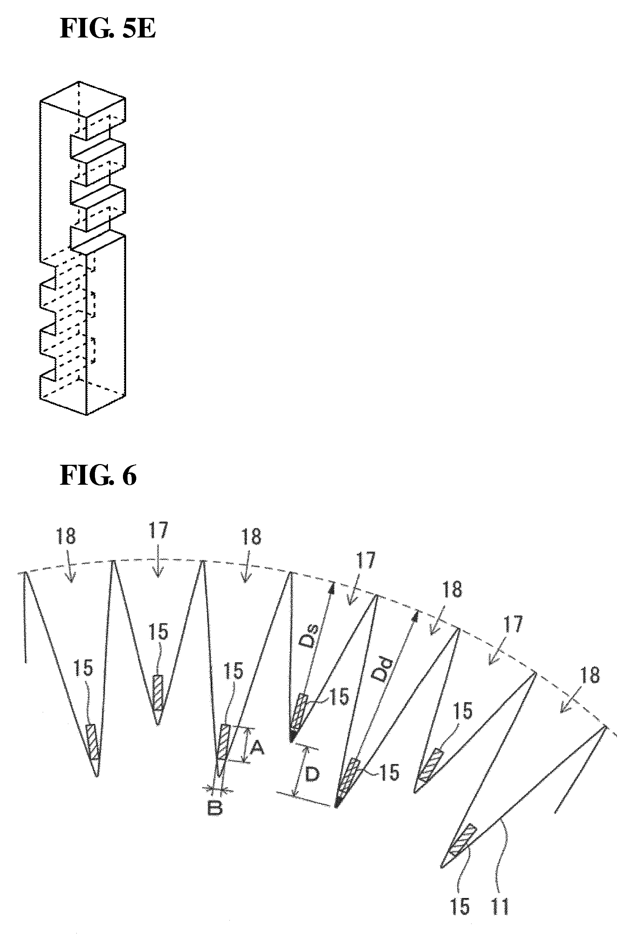

Figure 5 illustrates examples of a structure of the reinforcing member. Figure 5A illustrates a column, and Fig. 5B illustrates a quadrangular prism. In addition to these, pillar-shaped members having cross sections with various polygonal shapes may be used. Figure 5C illustrates a sheet-like member having a rectangular cross section. In Fig. 5C, a length of a cross section in the long-side direction is defined as A, and a length of the cross section in the short-side direction is defined as B. In the case where a cross-sectional shape has a long-side side and a short-side side in this manner, the long-side side is preferably arranged in the radial direction of the cylinder of the pleated filter. This is because, in the operation of the reinforcing member described above, it is preferable for the reinforcing member to loosely support bending of the filter base in a direction in which pleats open, and to more strongly support the filter base in a direction in which pleats bend. The length of the reinforcing member is determined in accordance with the height of the cylinder of the pleated filter cartridge. The size of the cross section of the reinforcing member is designed in accordance with a desired strength and a desired degree of deflection. Typically, in a structure having a pleat height of about 100 to 500 mm and a pleat depth of about 50 to 100 mm, a representative length of the cross section of the reinforcing member is about 2 to 10 mm. Herein, the term "representative length" refers to a diameter when a cross-sectional area of a pillar-shaped member is converted to an equivalent circle.

The reinforcing member is preferably formed of any material selected from the group consisting of polypropylene, polyethylene (in particular, medium-density polyethylene to low-density polyethylene in terms of restoring force), polyamide resins such as nylons, polyester resins such as polyethylene terephthalate, and vinyl chloride. A resin member having a required strength in consideration of the ease of handling in the production, the reduction in the weight, the cost, etc. is preferably used. Polypropylene is particularly preferable from the viewpoint of having suitable bending strength and permissible stain. Some metallic materials and nonmetallic materials such as glass-ceramics have a performance superior to that of resins in terms of strength. However, in this embodiment, a restoring force to deformation is also required for the reinforcing member. Therefore, in the case of a metal, it is necessary to use a spring material or to perform a quenching treatment. However, comprehensively considering a process for forming a network structure and corrosiveness for seawater, the resin materials mentioned above are suitable for the reinforcing member.

Figures 5D and 5E illustrate other examples of a structure of the reinforcing member. Figure 5D illustrates an example of a structure in which a plurality of holes are provided in a pillar-shaped member having a quadrangular cross section. This is an example in which holes are arranged in the radial direction of a cylinder of a pleated filter in order to suppress blocking of the flow of untreated water due to the presence of the pillar-shaped member in a valley portion. Figure 5E illustrates an example of a structure in which a plurality of recesses are provided on surfaces of a pillar-shaped member having a quadrangular cross section. The same effect as that achieved by the holes is obtained by arranging grooves of grooved portions, which are the recesses, in the radial direction of a cylinder of a pleated filter. Each of the examples of the structure can be used regardless of the cross-sectional shape of the pillar-shaped member before the holes or the grooves (protrusions and recesses) are formed. Various modifications of the shape of the holes and the shapes of the protrusions and recesses can be made as long as the flow can be made to be smooth. Although not exemplified in the figures, a wavy pattern for ensuring the flow path of untreated water in the radial direction of the cylinder is preferably formed on the reinforcing member because the flow of the untreated water can be made to be smoother as a whole.

Figure 6 illustrates, as still another embodiment of the pleated filter cartridge, a part of a cross section of a pleated filter, the cross section being perpendicular to a cylindrical axis of the pleated filter. The pleated filter formed by folding a filter base 11 has shallow valley portions 17 having a small pleat depth and deep valley portions 18 having a large pleat depth, the shallow valley portions 17 and the deep valley portions 18 being alternately arranged. The pleated filter includes, as reinforcing members 15, pillar-shaped members having a rectangular cross section in each of the valley portions. Figure 6 is a schematic view for explanation, and the dimensional relationship in the figure does not have a meaning. Folds on the outer circumferential side of the cylinder are substantially arranged on the circumference of the circle. The shape of the reinforcing member is an exemplification and may be another shape. Herein, a pleat depth (Ds) of a shallow valley portion and a pleat depth (Dd) of a deep valley portion substantially satisfy the relationship Ds = (3/4)Dd and are in the range of Ds > (1/3)Dd in the figure. Furthermore, D represents a depth difference between the pleat depth of the shallow valley portion 17 and the pleat depth of the deep valley portion 18 (that is, the difference in the distance in the radial direction from the center of the cylinder to an end of a valley portion). In this case, the structure is determined so as to satisfy the range of A ≤ D ≤ 10A where A represents a maximum length of the pillar-shaped member in the radial direction. With this structure, since the pillar-shaped members are disposed so as to be alternately shifted in the radial direction of the cylinder, the pleats can be densely arranged to increase the number of the pleats.

### (Filtering device)

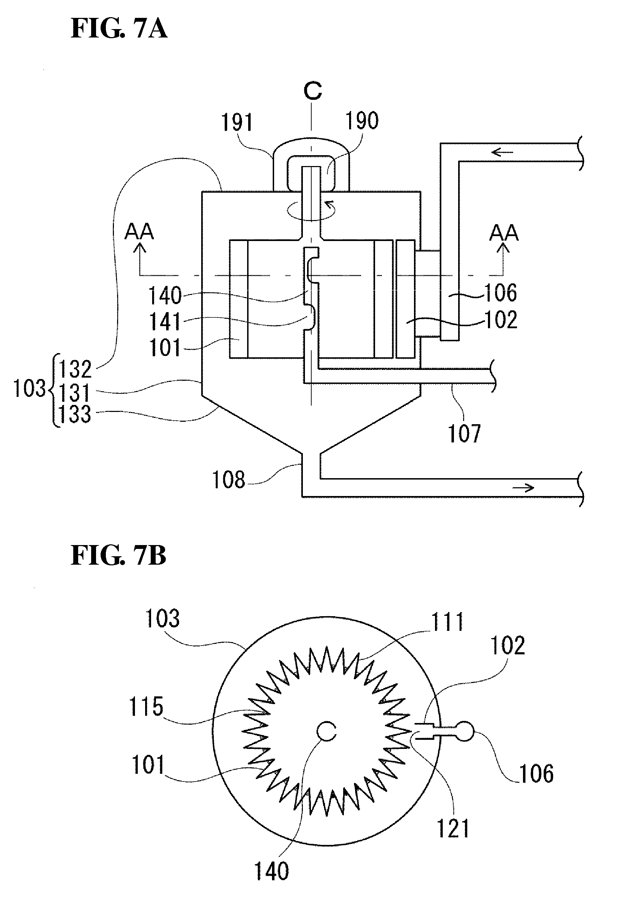

As a preferred application example of a filtering device including the pleated filter cartridge described above, a structure of a ballast water treatment apparatus will be described with reference to drawings. Figures 7A and 7B are views illustrating an example of an apparatus for treating ballast water for ships, according to an embodiment of the present invention. Figure 7A is a schematic view illustrating the structure of a vertical section including an axis line. Figure 7B is a schematic view illustrating the structure of a horizontal AA-AA section in Fig. 7A. A cylindrical pleated filter cartridge 101 is disposed about an axis line, which is the center of rotation, and is mounted to be rotatable about a central pipe 140 arranged in the center (the pipe does not rotate). Upper and lower surfaces of a pleated filter are sealed in a watertight manner. The rotatable attachment structure also needs to have a watertight structure. However, the attachment structure is not particularly limited, and a known structure may be used. A case 103 is provided so as to cover the whole filter. The case 103 includes an outer cylindrical portion 131, a lid portion 132, and a bottom portion 133. A discharge flow path 108 is provided on the bottom portion 133. An untreated- water flow path 106 and an untreated-water nozzle 102 are provided in order to introduce seawater as untreated water into the case 103. The untreated-water nozzle 102 is provided to extend from the untreated-water flow path 106 so as to have a nozzle opening 121 thereof in the outer cylindrical portion 131 of the case 103, and is configured so that untreated water flows toward an outer circumferential surface of the pleated filter. A motor 190 is provided on the central axis of the pleated filter cartridge for the purpose of the rotation of the pleated filter cartridge. The motor 190 is housed in a motor cover 191 and is driven by an electric power supplied from a driving control unit (not shown).

In this embodiment, the untreated water ejected from the untreated-water nozzle is applied to the outer circumferential surface of the pleats of the pleated filter, and an effect of cleaning the pleated filter is obtained by the pressure of the untreated water. The untreated water that is not filtered and suspensoid settled in the case are sequentially discharged from the discharge flow path on the bottom portion of the case. This point that filtration is performed while continuously and constantly discharging suspensoid and residual untreated water in this manner is also a feature of this apparatus. This feature is advantageous for reliably achieving an amount of treatment required for ballast water, namely, 10 to 20 ton/hour, and furthermore, more than 100 ton/hour. Although valves and the like are not illustrated in the discharge flow path in Fig. 7A, devices necessary for maintenance and flow-rate control are provided. The filtered water filtered by the filter base of the pleated filter cartridge 101 is guided to a filtered-water flow path 107 through water intake holes 141 provided in the central pipe 140 in the filter, and is discharged to the outside of the case.

The nozzle opening 121 of the untreated-water nozzle 102 may have a rectangular opening. As a result of the ejection of a large amount of water from the untreated-water nozzle onto the pleated filter surface, bending is repeatedly applied in directions in which folds of the pleated filter open and close. In this case, bending is three-dimensionally applied to the folds of the valley portions, as described above. In this embodiment, by using the pleated filter cartridge that includes reinforcing members 115 in the valley portions, tearing of the valley portions can be effectively suppressed, and the apparatus can be operated more stably for a longer period of time. It is to be noted that combinations of reinforcement of the folds using other means, use of means for preventing tearing of peak portions, and the like are not precluded. A plurality of means may be used in combination. In such an embodiment, it is possible to more effectively prevent tearing of the folds of the whole pleated filter including the peak portions.

### (System for treating ballast water for ships)

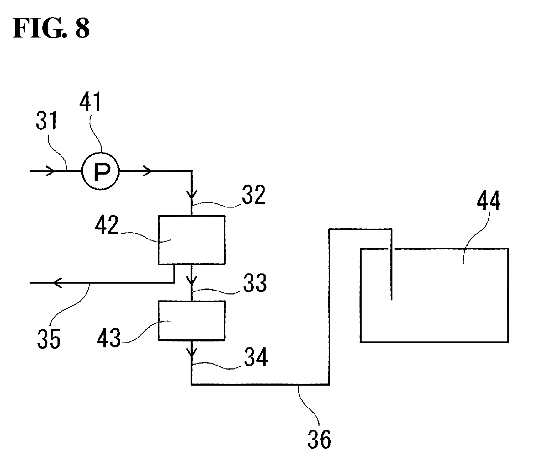

Figure 8 is an explanatory diagram that schematically illustrates the overall structure of a system for treating ballast water for ships, the system using the ballast water treatment apparatus described above as a filtering device. In Fig. 8, untreated water, which is seawater taken from the ocean, is fed through a pipe 31 with a pump 41 and is supplied to a filtering device 42, which is filtering means, through a pipe 32. Filtered water filtered in the filtering device 42 passes through a pipe 33 and is fed to a sterilization device 43 (which is not essential) such as an ultraviolet irradiation device or an electrolytic device. Discharge water that has not been filtered in the filtering device 42 is led to the outside of the device through a pipe 35. Seawater that has been subjected to a sterilization treatment is fed to a tank 44 through pipes 34 and 36.

### (EXPERIMENTAL EXAMPLE) Effect of reinforcing member

In order to confirm the effect obtained by reinforcing members, filtration was performed using the ballast water treatment apparatus illustrated in Figs. 7A and 7B. The apparatus that performed a treatment of 100 ton/hour had the following dimensions. A pleated filter had an outer diameter of 700 mm, a length in the axial direction of 320 mm, a height as an effective area of 280 mm, a pleat depth of 70 mm, and the number of pleats of 420.

### Materials used were as follows.

Filter base: Polyethylene terephthalate non-woven cloth (trade name: AXTAR™ G2260-1S BK0, manufactured by Toray Industries, Inc.)

### Reinforcing member: Polypropylene

The above reinforcing members were used, and the reinforcing members were attached to the filter as illustrated in Fig. 7B. In the case where the reinforcing members were not used, breakage occurred on the outer ends of the filer after a filtration operation was performed for 233 hours. In contrast, in the filtration under the same conditions, in the case where the reinforcing members were provided, breakage on the outer ends of the filter did not occur even after 270 hours.

### Industrial Applicability

According to the pleated filter of the present invention, a decrease in the performance due to breakage does not occur, and the pleated filter has good durability. Accordingly, the pleated filter of the present invention can be suitable for use in preliminary filtration treatment for removing foreign matter, contaminants, and microbes in water in the cases of seawater desalination, the use of brackish water/seawater for purposes such as ballast water, or the treatment of water such as sewage water, human sewage, industrial waste water, or the like. Furthermore, the pleated filter is suitable for the treatment of water having a high suspensoid/high SS content and a concentration treatment, and thus can also be used in the field of collection of valuable recyclable materials, for example, in the field of food.

## Claims

1. A pleated filter cartridge comprising a pleated filter formed of a filter base having folds that repeatedly form peak portions and valley portions, the pleated filter having a shape of a cylinder whose axial direction is a ridge line direction of the folds; and lid portions disposed on an upper bottom and a lower bottom of the pleated filter, wherein reinforcing members whose top and bottom are fixed in the lid portions are provided in the valley portions viewed from the outside of the shape of the cylinder.

2. The pleated filter cartridge according to Claim 1, wherein each of the reinforcing members is a pillar-shaped member, and, in a cross section orthogonal to the axial direction of the shape of the cylinder, a ratio A/B satisfies 1 < A/B ≤ 5 where A represents a maximum length of the pillar-shaped member in a radial direction of the shape of the cylinder, and B represents a maximum length of the pillar-shaped member in a direction perpendicular to the radial direction.

3. The pleated filter cartridge according to Claim 2, wherein the cross section of the pillar-shaped member is a circle or a regular polygon.

4. The pleated filter cartridge according to Claim 2 or 3, wherein a modulus of elasticity in tension of the pillar-shaped member is 20% or more and 80% or less of a modulus of elasticity in tension of the filter base.

5. The pleated filter cartridge according to any one of Claims 2 to 4, wherein the pillar-shaped member has a plurality of holes in a direction intersecting the axial direction.

6. The pleated filter cartridge according to any one of Claims 2 to 5, wherein the pillar-shaped member has a plurality of protrusions and recesses on a surface that comes in contact with the filter base.

7. The pleated filter cartridge according to any one of Claims 1 to 6, wherein the pleated filter has shallow valley portions having a small pleat depth and deep valley portions having a large pleat depth, the shallow valley portions and the deep valley portions being alternately arranged,
a relationship Ds > (1/3)Dd is satisfied where Ds represents the pleat depth of the shallow valley portions and Dd represents the pleat depth of the deep valley portions, and
a relationship A ≤ D ≤ 10A is satisfied where D represents a depth difference (= Dd - Ds) and A represents a maximum length of the reinforcing member in the radial direction of the shape of the cylinder.

8. A ballast water treatment apparatus using, as a filter membrane, the cylindrical pleated filter cartridge according to any one of Claims 1 to 7,
the pleated filter cartridge being rotatable about a cylindrical axis,
the ballast water treatment apparatus comprising:
an untreated-water nozzle that ejects untreated water toward an outer circumferential surface of the pleated filter;
a case that includes an outer cylindrical portion provided so as to surround the pleated filter and including a nozzle opening of the untreated-water nozzle therein;
a filtered-water flow path that leads filtered water having passed through the pleated filter from the inside of the cylinder of the pleated filter to the outside of the case; and
a discharge flow path that discharges discharge water that is not filtered by the pleated filter to the outside of the case.

9. A method for treating ballast water, the method comprising installing the ballast water treatment apparatus according to Claim 8 in a hull; using, as untreated water, seawater taken from the outside of the hull; further applying a sterilization treatment to filtered water treated by the ballast water treatment apparatus; and subsequently storing the resulting water in the hull as ballast water.
